**Europäisches Patentamt**

**European Patent Office**

**Office européen des brevets**

(19)

(11) Veröffentlichungsnummer: **0 291 141**

**A2**

(12) # EUROPÄISCHE PATENTANMELDUNG

(21) Anmeldenummer: **88201037.4**

(22) Anmeldetag: **15.04.88**

(51) Int. Cl.4: **B41F 13/18**

(30) Priorität: **15.04.87 IT 2013287**

(43) Veröffentlichungstag der Anmeldung:
**17.11.88 Patentblatt 88/46**

(84) Benannte Vertragsstaaten:
**CH DE FR GB IT LI**

(71) Anmelder: **Componenti Grafici S.r.l.**
**Via Mazzini 39**
**I-27031 Candia Lomellina (Pavia)(IT)**

(72) Erfinder: **Molinatto, Bruno**
**Via Ivrea 128**
**I-20016 Montalto Dora(IT)**

(74) Vertreter: **Mayer, Hans·Benno**
**Via dell'Orso 7/A**
**I-20121 Milano(IT)**

(54) **Verbesserte Anpressrolle für Rotationsdruckmaschinen.**

(57) Anpressrolle oder -zylinder fuer eine Rotationsdruckmaschine mit einer Aufnahmewelle und einem zylindrisch ausgebildeten, koaxial angeordneten Mantel, der drehbar auf einer Aufnahmewelle, unter Zwischenschaltung von Waelzlagern angeordnet ist, sowie mit pneumatischen Einrichtungen, um auf den Rollenmantel eine radial nach aussen gerichtete Druckkraft auszuueben.

Zur Uebertragung des Radialdruckes weist die Rolle zwei Waelzlager an den Enden des Rollenmantels und zwei innenliegende koaxial zur Aufnahmewelle angeordnete Laufbuchsen auf; die Buchsen sind symmetrisch zur Laengsachse der Aufnahmewelle ausgerichtet und jede Buchse nimmt an ihren Enden Waelzlager auf. Die Lagerbuchsen weisen ferner Betaetigungsbaelge auf, die von Luftkammern gebildet sind und an eine Druckleitung angeschlossen werden, die in Laengsrichtung die Aufnahmewelle durchdringt. Damit erfolgt die Durchbiegung der Anpressrolle steuerbar ueber mehrere Druckpunkte, von denen 4 Druckpunkte im Inneren der Laengserstreckung der Rolle vorgesehen sind.

In vorteilhafter Weise weist die Aufnahmewelle wabenartigen Aufbau auf, z.B. in Form einer Stahlkonstruktion, die aus sich kreuzenden Bauteilen besteht, und die von einem Metallmantel umgeben ist, der z.B. an der Wabenstruktur durch Verschweissen befestigt ist.

Ferner kann der Walzenmantel wenigstens teilweise z.B. ueber seinen auesseren Umfang aus einem Verbundwerkstoff bestehen, z.B. unter Verwendung eines Harzes, das mit Carbonfasern verstaerkt ist.

FIG. 1

## "Verbesserte Anpressrolle fuer Rotationsdruckmaschinen"

Die vorstehende Erfindung betrifft eine Anpresswalze oder einen Anpresszylinder, wie diese in Rotationsdruckmaschinen eingesetzt werden, z.B. zum Bedrucken von Verpackungsmaterial. Walzen oder Zylinder dieser Art haben die Aufgabe, die Durchbiegung des Druckzylinders auszugleichen, in der Art, dass mit einem gleichmaessigen Verlauf der Anpresskraft die Materialbahn an den Druckzylinder angedrueckt wird, und somit ein gleichmaessiges Druckbild ueber die gesamte Breite der zu bedruckenden Materialbahn erzielbar ist.

Es sind bereits verschiedene Walzen oder Zylinder dieser Art bekannt geworden, die unterschiedlichen Aufbau und unterschiedliche Arbeitsweise haben und dazu dienen, die Durchbiegung der Mantelflaeche des Druckzylinders annaeherungsweise nachzubilden. Mit Zunahme der Breite der Druckbahnen und mit Zunahme der Druckgeschwindigkeit treten immer haeufiger Probleme hinsichtlich des Druckbildes und hinsichtlich der dynamischen Stabilitaet des Druckzylinders und der flexiblen Anpresswalzen auf.

Fuer grosse Bahnbreiten ist es der Anpresswalze meist nicht mehr moeglich, mit der erforderlichen Genauigkeit der Kruemmung, die aufgrund der Durchbiegung des Druckzylinders eintritt, zu folgen. Diese auftretenden Durchbiegungen und Verwindungen fuehren auf ein unregelmaessiges Druckbild zurueck. Ferner, mit zunehmender Bahnbreite, die 3 m und mehr betragen kann, sind die rotierenden Massen erheblich, besonders was Aufnahmewelle und Mantel der Anpresswalze anbetrifft, und es treten Schwingungen auf, die die Qualitaet des Druckbildes nachteilig beeinflussen und/oder dazu fuehren, dass die Druckgeschwindigkeit auf niedrigere Werte eingestellt werden muss, um somit ein Beschaedigen der Vorrichtung zu vermeiden.

Aufgabe der vorstehenden Erfindung ist es, eine verbesserte Anpresswalze vorzuschlagen, deren Einsatz die Moeglichkeit schafft, die geschilderten Nachteile des Standes der Technik zu vermeiden. Die erfindungsgemaesse Aufgabe wird durch eine Anpresswalze fuer eine Rotationsdruckmaschine geloest, die eine Aufnahmewelle und einen zylindrischen Mantel aufweist, der koaxial drehbar von einer Aufnahmewelle, unter Zwischenschaltung von Waelzlagern aufgenommen ist, sowie unter Vorsehung von pneumatischen Einrichtungen, um auf den Walzenmantel eine radial, nach aussen gerichtete Kraft aufzubringen, wobei die Anpresswalze dadurch gekennzeichnet ist, dass die pneumatischen Einrichtungen aus zwei im Mantelinneren liegenden Buchsen bestehen, die koaxial zur Aufnahmewelle gelagert und symmetrisch zur Laengsachse der Aufnahmewelle angeordnet sind, dass jede Buchse endseitig ein Lager aufweist und mit einem Balg versehen ist, der dazu dient, einen Radialdruck an innenliegenden Stellen des Walzenmantels an diesen zu uebertragen.

Nach einer weiteren Ausfuehrungsform der Erfindung ist die Walze dadurch gekennzeichnet, dass ihre Aufnahmewelle wabenartigen Aufbau hat und von einem Metallmantel umgeben ist, der an der Welle durch Schweissung befestig ist.

Entsprechend einem weiteren Vorschlag der Erfindung, ist die Walze dadurch gekennzeichnet, dass der Walzenmantel wenigstens teilweise an seiner Aussenseite aus einem Verbundwerkstoff besteht, in vorteilhafter Weise aus einem faserverstaerkten Kunststoff.

Der Erfindungsgegenstand wird nun anhand einiger Ausfuehrungsbeispiele, die in den Zeichnungen schematisch dargestellt sind, genauer beschrieben:

Fig. 1 zeigt im Laengsschnitt die erfindungsgemaesse Anpresswalze oder den Anpresszylinder;

Fig. 2 zeigt schematisch die eintretende Verformung und die Verteilung der Kraefte in der Anpresswalze;

Fig. 3 zeigt teilweise in Laengsschnitt den inneren Aufbau der erfindungsgemaessen Aufnahmewelle;

Fig. 4 zeigt einen Schnitt nach Linie IV-IV der Fig. 3;

Fig. 5 zeigt einen Schnitt entlang der Linie V-V der Fig. 5;

Fig. 6 zeigt einen teilwesen Laengsschnitt eines Walzenmantels nach der Erfindung ; und

Fig. 7 zeigt einen Teilschnitt einer weiteren Ausfuehrungsform eines erfindungsgemaessen Walzenmantels.

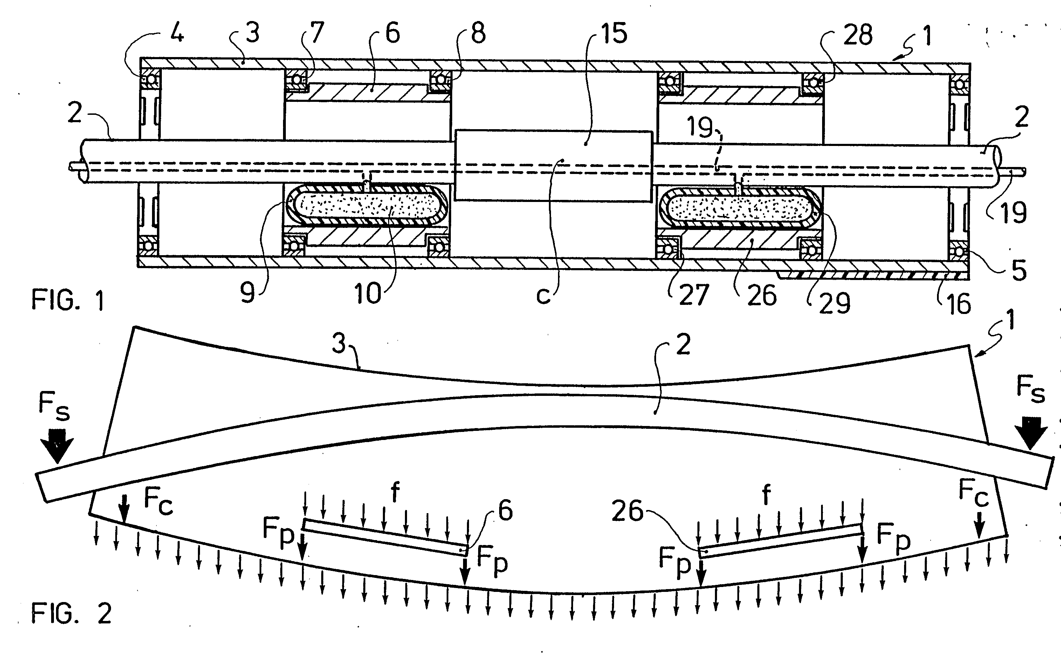

Die Anpresswalze oder der Anpresszylinder 1 sind in Fig. 1 im Laengsschnitt dargestellt. Die Walze 1 besteht aus einer fest angeordneten inneren Welle 2, die von nicht dargestellten Lagern aufgenommen ist. Die Walze 1 weist einen zylinderfoermigen Mantel 3 auf, der koaxial zur und drehbar auf der Welle 2 angeordnet ist. Der Mantel 3 ist an seiner Aussenflaeche mit elastischem Material 16 beschichtet, z.B. mit einer Gummischicht. Diese Gummischicht wurde aus Gruenden der Einfachheit nur teilweise dargestellt und ist mit dem Bezugzeichen 16 gekennzeichnet. In bekannter Weise ist der Mantel 3 aus Metall hergestellt, in vorteilhafter Weise aus Stahlblech. Der Mantel 3 ist drehbar, unter Zwischenschaltung von Waelzlagern 4 und 5 gelagert. Die Waelzlager 4 und 5 sind derartig angeordnet, dass sie einen radialen Druck auf die Aussenflaeche des Mantels 3 ausueben koennen. Diese Kraft wird mit Fc in der schematischen Darstellung gemaess Fig. 2 dargestellt. Genauer gesagt, eine Kraft (Fs) wird ueber nicht dargestellte Arbeitskolben auf die Welle 2 uebertragen und die Welle 2 uebertraegt ihrerseits die Kraft Fc ueber die Waelzlager 4 und 5 auf den Mantel 3.

Erfindungsgemaess weist die Walze 1 zwei innenliegende Buchsen 6 und 26 auf, die zentriert zur Laengsachse C der Welle 2 angeordnet sind.

Wie der Fig. 1 entnommen werden kann, sind die beiden Buchsen 6 und 26 seitlich neben einer mittigen Verdickung 15 der Welle 2 angeordnet.

Am Ende einer jeden Buchse 6, 26 sind Waelzlager 7, 8 und 27, 28 angeordnet, die geeignet sind, radiale Druckkraft auf den Mantel 3 zu uebertragen. Diese Druckkraefte werden durch Betaetigungsbaelge 9 und 29 erzeugt die im Inneren der Buchsen 6 und 26 angeordnet sind und eine Luftkammer 9, 29 bilden, in die ein Druckmittel 10 geleitet wird, das den Kammern 9, 29 ueber eine Anschlussleitung 19, die in Laengsrichtung die Welle 2 durchdringt, zugefuehrt wird. Durch Veraendern des Druckes des ueber die Zufuehrleitung 19 eingespeisten Druckmittels aendert sich auch die durch die Kammer 9 und 29, bzw. durch die Buchsen 6, 26 an den Mantel ueber die Waelzlager 7, 8 und 27, 28 uebertragene Anpresskraft.

Fig. 2 zeigt schematisch die uebertragenen Kraefte und in uebertriebener Darstellung die Verformung der erfindungsgemaessen Anpresswalze.

Waehrend des Druckvorganges wird die Aufnahmewelle 2 in einer Richtung verformt, waehrend die Flaeche des rotierenden Mantels 3 in entgegengesetzter Richtung verformt wird. Somit wird eine gewoelbte Mantellinie gebildet, die genau der Verformung des Druckzylinders folgt. Auf die Welle 2 wirken die Kraefte Fs der nicht dargestellten Auflager ein, waehrend auf die Mantelflaeche des Mantels 3, 16 die Kraefte Fc der Waelzlager 4 und 5, sowie die vier Lager 7, 8; 27, 28 in Fp ueber die innenliegenden Waelzlager 7, 8 und 27, 28 einwirken.

Wie der Fig. 2 zu entnehmen ist, setzen sich die Kraefte Fp aus den Kraeften f zusammen, die auf die Buchsen 6, 26 durch die Luftkammern 9, 29 uebetragen werden. Die auf die Mantelflaeche einwirkenden Kraefte sind derartig, dass eine gleichmaessige Durchbiegung des Mantels erzielt wird, wodurch sich der Mantel 3 an die Verformung der Druckzylinders anpasst.

In Fig. 2 sind ferner mit Fr jene Kraefte dargestellt, die durch die Anpresswalze 1 auf den Druckzylinder (nicht dargestellt) uebertragen werden. Die Uebertragung von Biegekraeften auf den Walzenmantel 3, 16, an sechs Druckpunkten, d.h. zwei aussenliegenden Uebertragungspunkten 4, 5 und vier inneren Uebertragungspunkten 7, 8; 27, 28 und die Moeglichkeit, die Druckkraft zu veraendern, erlaubt es, die Durchbiegung des Walzenmantels 3, 16 an die Durchbiegung des Druckzylinders in optimaler Weise anzupassen, ohne dabei mit sehr hohen Druecken arbeiten zu muessen. Dies ist besonders vorteilhaft fuer sehr breite Materialbahnen, fuer die der Einsatz hohen Druckkraefte das Bedrucken bestimmter Materialien ausschliessen wuerde, z.B. im Fall von sehr duennen, filmartigen zu bedruckenden Kunststoffolien.

Die Volumenvergroesserung der Baelge 9, 29 erfolgt in differenzierter Weise, denn die Druckbaelge 9, 29 haben die Moeglichkeit eventuelle Leerraeume auszugleichen. Werden z.B. die Welle 2, der Walzenmantel 3 und die Lagerbuchsen 6, 26 verformt, so erfolgt durch den zugeordneten Druckbalg 9, 29 eine differenzierte Verformung in Laengsrichtung, es wird jedoch stets die gleiche Kraft durch die Balgoberflaeche uebertragen. Dies ist in Fig. 2 verdeutlicht, wo die Flaechen der Buchsen 6 und 26 geneigt angeordnet sind.

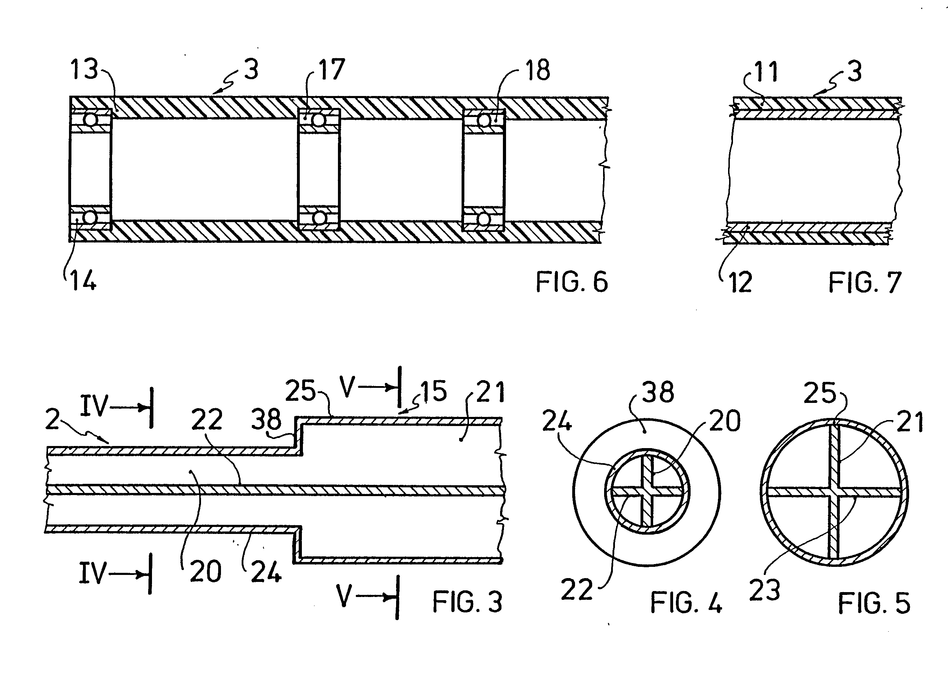

Unter Bezugnahme auf die Figuren 3 - 5 wird nun der Aufbau der erfindungsgemaessen Welle 2 entsprechend einem Verbesserungsvorschlag dargestellt und beschrieben.

Wie der Fig. 1 zu entnehmen ist, weist die Welle 2 mittig eine Verdickung 15 auf, um groesseren Widerstand gegen einwirkende Kraefte aufzuweisen. Die vom Stand der Technik her bekannten Wellen dieser Art haben meist konstanten Querschnitt, andere bekannte Wellen dieser Art sind im mittigen Teilstueck sogar als Verjuengung ausgebildet.

Anstelle einer in Vollmaterial hergestellten Welle wird fuer den Aufbau der erfindungsgemaessen Welle 2 ein wabenartiger oder zellenartiger Aufbau gewaehlt. Der wabenartige Aufbau ist im Inneren eines Mantels oder einer metallischen Huelse angeordnet.

Bei Betrachtung der Figuren 3 und 4 wird deutlich, dass die seitlichen Abschnitte der Welle 2 geringeren Durchmesser aufweisen und z.B. kreuzartigen Aufbau 20, 22 haben. Dieser Aufbau wird von einem Blechmantel 24 umgeben. In gleicher Weise wird aus Fig. 3 und 5 ersichtlich, dass das mittige Teilstueck der Welle 2 einen vergroesserten Durchmesser aufweist und ebenfalls kreuzartige Wabenstruktur 21, 23 hat, die aussen von einem Metallmantel 25 umgeben ist. Der Uebergang von einem ersten Durchmesser zu einem zweiten Durchmesser wird von einem Flansch 38 ueberbrueckt, der in Fig. 3 kreisfoermig ausgebildet ist und in einfacher Weise das zentrale Teilstueck 15 auf den Seiten abschliesst.

In Alternativloesung koennte dieser Flansch auch nach Art eines geradlinigen oder geschweiften Uebergangsstueckes ausgebildet sein, das zwischen der mittigen Verdickung 15 und den seitlichen Teilstuecken der Welle 2 vorgesehen ist.

In vorteilhafter Weise erfolgt die Verbindung zwischen der beschriebenen Wabenstruktur und dem Aussenmantel durch Schweissverbindung. Dabei sind die Bauteile in vorteilhafter Weise aus Stahlblech hergestellt.

Auf diese Weise wird gegenueber einer herkoemmlichen Welle, die als Kreisring ausgebildet ist, eine Welle mit neuem Aufbau geschaffen, die grosse Steifigkeit aufweist, aber nur geringe Masse hat. Es koennen somit unerwuenschte Schwingungen vermieden werden, besonders beim Bedrucken von sehr breiten Materialbahnen.

Eine weitere Verbesserung der erfindungsgemaessen Ausfuehrungsform betrifft den Aufbau des Walzenmantels, wie dies in zwei Ausfuehrungsbeispielen in den Figuren 5 und 6 dargestellt ist.

Der in Fig. 6 teilweise im Laengsschnitt dargestellte Mantel 3 besteht aus einem rohrfoermigen Koerper 13, der aus Verbundwerkstoff hergestellt ist, in vorteilhafter Weise unter Verwendung von faserverstaerkten Harzen, die in vorteilhafter Weise durch Carbonfasern verstaerkt werden. Dies fuehrt zu einer Zunahme der Steifigkeit des Mantels und gleichzeitig zu einer Verminderung der rotierenden Masse.

In einem Ausfuehrungsbeispiel sind die Carbonfasern in Form eines duennen Bandes vorgesehen, das mehrmals unter gegenseitigem Ueberkreuzen um einen Traeger gewickelt wird und im Anschluss mit Epoxydharz getraenkt wird. Es ist zu beruecksichtigen, dass der Mantel des aeusserste, sich drehende Bauteil der Walze bildet und mit dem beschriebenen erfindungsgemaessen Vorschlag das Gewicht der Walze verminderte Werte einnimmt, die nur 1/4 bis 1/5 des Gewichtes eines Metallmantels entsprechen. Erfindungsgemaess sind die sich drehenden Ringe 14, 17, 18 der Waelzlager 7, 8, 27 bei dieser Ausfuehrungsform teilweise in den Verbundwerkstoff eingebettet. Diese Bauart bringt den Vorteil mit sich, dass die Lagerringe, die die Durchbiegung der Anpresswalze verursachen, direkt in den Walzenmantel eingebettet werden koennen.

Bei dieser Ausfuehrungsform besteht der rohrfoermige Koerper 13 gaenzlich aus einem Verbundwerkstoff.

Entsprechend der in Fig. 7 schematisch dargestellten Ausfuehrungsform besteht der Walzenmantel 3 aus einer ersten Walze, die aus Verbundwerkstoff 11 gebildet ist, das aus ein metallisches Bauteil 12 aufgebracht ist, die als Grundkoerper fuer die Herstellung der Walze dient. Das in Metall ausgebildete Bauteil kann aus sehr duennem Blech bestehen und dient als Grundkoerper der nur in sehr bescheidener Weise zur Masse des Walzenmantels 3 beitraegt.

Mit den beschriebenen Ausfuehrungsbeispielen fuer den sich drehenden Walzenmantel wird eine hoehere Steifigkeit und eine erhebliche Verminderung der Masse fuer den Walzenmantel erzielt. Dadurch wird die Moeglichkeit geschaffen, die Walze auch mit hoher Rotationsgeschwindigkeit anzutreiben, ohne dass dabei stoerende Schwingungen auftreten.

## Ansprüche

1. Anpresswalze fuer eine Rotationsdruckmaschine, mit einer Aufnahmewelle und einem Walzenmantel, der koaxial und drehbar, unter Zwischenschaltung von Waelzlagern und pneumatisch betaetigbaren Baelgen auf der Aufnahmewelle gelagert ist, und der Walzenmantel durch eine radial nach aussen gerichtete Druckkraft verformbar ist, **dadurch gekennzeichnet**, dass die Pneumatikbaelge (9, 29) durch im Walzenmantel (3, 16) angeordneten Buchsen (6, 26) aufgenommen sind, die koaxial zur Aufnahmewelle (2) angeordnet und symmetrisch zur Mittenachse (C) der Welle (2) angeordnet sind, und dass jede Buchse (6, 26) endseitig je ein Waelzlager (7,8; 27, 28) und einen betaetigbaren Pneumatikbalg (9, 29) aufnimmt und diese Baelge (9, 29) einen radialen nach aussen gerichteten Druck in Uebereinstimmung mit den Lagern (7, 8; 27, 28) auf den Walzenmantel (3) uebertragen.

2. Anpresswalze, nach Patentanspruch 1, **dadurch gekennzeichnet**, dass die Pneumatikbaelge (9, 29) in ihrem Volumen veraenderbare Luftkammern bilden, die zwischen der Aufnahmewelle (2) und den Buchsen (6, 26) angeordnet sind und mit einer Druckleitung (19) in Wirkverbindung stehen, die die Welle (2) in Laengsrichtung durchdringt.

3. Anpresswalze, nach Patentanspruch 1, **dadurch gekennzeichnet**, dass die Aufnahmewelle (21) wabenartigen, kammerfoermigen Aufbau (20, 21; 21, 23) aufweist, der aus Stahlblech besteht und von einem Metallmantel (24) umgeben wird, der in vorteilhafter Weise durch Schweissen befestigt ist.

4. Anpresswalze, nach Patentanspruch 3, **dadurch gekennzeichnet**, dass die wabenartige, kammerartige Struktur kreuzfoermigen Querschnitt aufweist.

5. Anpresswalze, nach Patentanspruch 3 oder 4, **dadurch gekennzeichnet**, dass die Aufnahmeweille (2) in ihrer Mittenpartie groesseren Durchmesser (15) aufweist.

6. Anpresswalze, nach Patentanspruch 1 - 5, **dadurch gekennzeichnet**, dass der Walzenmantel (3) teilweise aus Verbundwerkstoff, z.B. aus faserverstaerktem Kunststoffharz besteht.

7. Anpresswalze, nach Patentanspruch 6, **dadurch gekennzeichnet**, dass die sich drehenden Ringe der im Mantelinnern (3) angeordneten Waelzlager (14, 17, 18) teilweise in den Verbundwerkstoff (13) eingebettet sind.

8. Anpresswalze, nach Patentanspruch 6 oder 7, **dadurch gekennzeichnet**, dass der Verbundwerkstoff (13) aus Epoxydharz besteht, in dem sich ueberkreuzende und aus Carbonfasern bestehende Faserbuendel eingebettet sind.

FIG. 1

FIG. 2

FIG. 6

FIG. 7

FIG. 3

FIG. 4

FIG. 5

0 291 141